(19) Europäisches Patentamt
European Patent Office
Office européen des brevets

(11) **EP 3 469 408 B1**

(12) **FASCICULE DE BREVET EUROPEEN**

(45) Date de publication et mention
de la délivrance du brevet:
**17.11.2021 Bulletin 2021/46**

(21) Numéro de dépôt: **17727620.1**

(22) Date de dépôt: **08.06.2017**

(51) Int Cl.:
*G02B 6/10* (2006.01)          *G02B 6/122* (2006.01)
*G02B 6/24* (2006.01)          *H01S 5/028* (2006.01)
*H01S 5/10* (2021.01)          *G02B 6/12* (2006.01)

(86) Numéro de dépôt international:
**PCT/EP2017/063934**

(87) Numéro de publication internationale:
**WO 2017/211936 (14.12.2017 Gazette 2017/50)**

(54) **DISPOSITIF OPTIQUE**

OPTISCHE VORRICHTUNG

OPTICAL DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.06.2016 FR 1655396**

(43) Date de publication de la demande:
**17.04.2019 Bulletin 2019/16**

(73) Titulaire: **Commissariat à l'Energie Atomique et
aux Energies
Alternatives
75015 Paris (FR)**

(72) Inventeur: **BOUTAMI, Salim
38100 GRENOBLE (FR)**

(74) Mandataire: **Brevalex
95, rue d'Amsterdam
75378 Paris Cedex 8 (FR)**

(56) Documents cités:
**US-A1- 2004 042 753       US-A1- 2005 226 283
US-A1- 2011 032 967**

• **ZHAOFENG LI ET AL: "Resonant cavity based
compact efficient antireflection structures for
photonic crystals; Compact antireflection
structures for photonic crystals", JOURNAL OF
PHYSICS D: APPLIED PHYSICS, INSTITUTE OF
PHYSICS PUBLISHING LTD, GB, vol. 40, no. 19,
7 octobre 2007 (2007-10-07), pages 5873-5877,
XP020111930, ISSN: 0022-3727, DOI:
10.1088/0022-3727/40/19/012**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

L'invention concerne un procédé de fabrication d'un filtre pour guide d'onde. Plus particulièrement, l'invention concerne un procédé destiné à modifier le coefficient de transmission d'un rayonnement quasi monochromatique par un guide d'onde.

L'invention concerne également un dispositif optique comprenant un guide d'onde et une lame filtre destinée à modifier le coefficient de transmission dudit guide d'onde.

**ÉTAT DE LA TECHNIQUE ANTÉRIEURE**

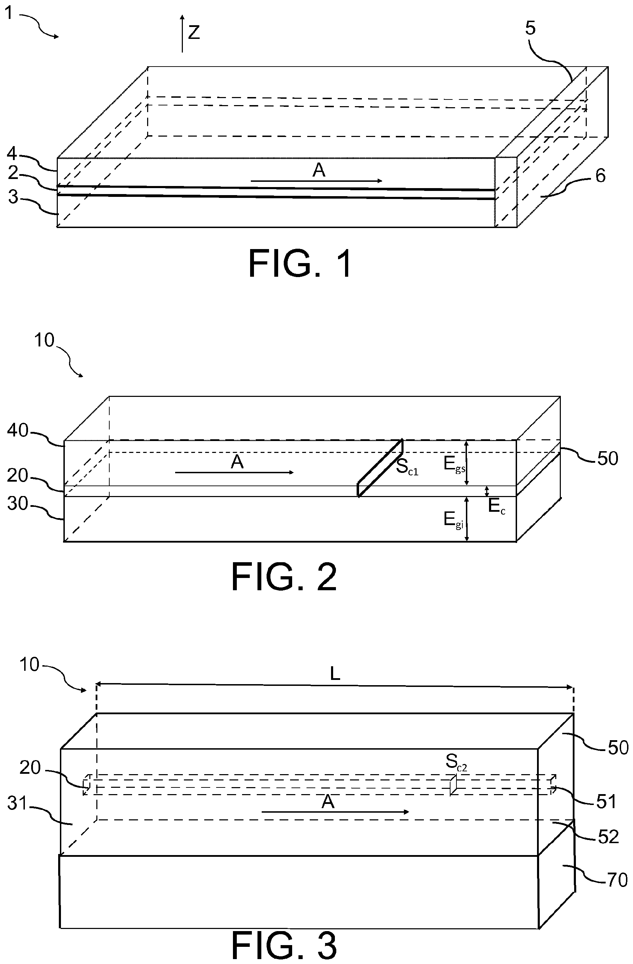

Un guide d'onde 1, connu de l'état de la technique, et illustré à la figure 1, comprend un coeur 2, d'indice de réfraction $n_c$, intercalé entre deux couches gaines 3 et 4 d'indice de réfraction $n_g$ inférieur à $n_c$.

En fonctionnement, le guide d'onde 1 guide un rayonnement lumineux, de longueur d'onde centrale quasi monochromatique $\lambda$, selon une première direction A et au travers d'une facette de sortie 5 du guide d'onde 1.

Cependant le passage du rayonnement lumineux au travers de la facette de sortie 5 vers l'environnement extérieur (dans le cas présent l'air) n'est que partiel (la quantité de rayonnement lumineux effectivement transmis vers l'environnement extérieur est caractérisée par un coefficient de transmission T), et ledit rayonnement lumineux est en partie réfléchi par la facette de sortie 5. Cette réflexion du rayonnement lumineux sur la facette de sortie 5 du guide d'onde 1 est imposée par la différence entre l'indice de réfraction effectif du mode (noté $n_{eff}$) se propageant dans le guide d'onde 1 et l'indice de réfraction de l'environnement extérieur. (A cet égard, l'homme du métier trouvera une description détaillée du concept « d'indice de réfraction effectif du mode » dans le document [1]). Autrement dit, le coefficient de transmission T du guide d'onde est imposé par la différence entre l'indice de réfraction effectif du mode et l'indice de réfraction de l'environnement extérieur.

Ce phénomène de réflexion sur la facette de sortie 5 est dans de nombreux cas de figure qualifié de réflexion parasite, et par conséquent non contrôlé.

Aussi, il est des circonstances pour lesquelles ce phénomène peut être la source de pertes du signal optique, générant ainsi une dégradation des performances des dispositifs optiques comprenant de tels guides d'ondes, et plus particulièrement les dispositifs à circuits photoniques intégrés.

Le document [2] propose donc une méthode permettant de contrôler le coefficient de transmission du guide d'onde par formation d'une couche filtre 6 sur la facette de sortie 5. Plus particulièrement, l'objectif technique visé dans le document [2], est de réduire le phénomène de réflexion indésirable. Selon le document [2], la couche filtre 6 comprend au moins un matériau diélectrique ou semi-conducteur (dit « matériau filtre »), et présente un indice de réfraction $n_{filtre}$ et une épaisseur $E_{filtre}$, dite « épaisseur quart d'onde », définie par les relations suivantes (1) et (2) :

$$n_{filtre} = \sqrt{n_{eff}n_0} \quad (1)$$

$$E_{filtre} = \frac{\lambda}{4\sqrt{n_{eff}n_0}} \quad (2)$$

Dans les relations (1) et (2), $\lambda$ est la longueur d'onde du rayonnement lumineux, $n_{eff}$ l'indice de réfraction effectif du mode, et $n_0$ l'indice de réfraction de l'environnement extérieur (par exemple l'indice de réfraction de l'air).

Cette solution permet, en théorie, d'adapter le coefficient de transmission du guide d'onde 1. Plus particulièrement, dès lors qu'elle vérifie les relations (1) et (2), la couche filtre 6 constitue un filtre antireflet, et permet de réduire les réflexions indésirables au niveau de la facette de sortie 5 et d'augmenter la transmission T.

Un matériau filtre à base de nitrure de silicium est généralement utilisé dès lors que le guide d'onde est à base de semi-conducteur. En effet, le nitrure de silicium présente un indice de réfraction proche de 2. Par ailleurs le nitrure de silicium est relativement transparent dans le visible et le proche infrarouge (à savoir pour des longueurs d'ondes comprises entre 0.3 et 7 $\mu$m).

Bien que le document [2] n'adresse que les problèmes associés aux réflexions parasites, il s'inscrit dans une problématique plus large qui est celle du contrôle et/ou de la modification du coefficient de transmission T d'un guide d'onde 1.

Cependant, cette méthode proposée dans le document [2] n'est pas satisfaisante.

En effet, cette méthode impose de trouver un matériau filtre présentant un indice de réfraction vérifiant la relation (1), par exemple, à la longueur d'onde du rayonnement lumineux.

Par ailleurs, les matériaux filtres peuvent présenter un coefficient d'absorption non nul à la longueur d'onde du rayonnement lumineux guidé par le guide d'onde. Notamment dans les gammes de longueurs d'onde de l'infra-rouge moyen (entre 3 et 8 $\mu$m), et de l'infra-rouge lointain (entre 8 et 14 $\mu$m), les matériaux filtres susceptibles de présenter un indice de réfraction vérifiant la relation (1) sont généralement très absorbants. En effet, la partie imaginaire de l'indice de réfraction (la partie imaginaire de l'indice de réfraction est proportionnelle au coefficient d'absorption) du nitrure de silicium est supérieure à 1 dans l'infra-rouge moyen et lointain. Par conséquent, dès lors qu'un guide d'onde 1 doit être utilisé dans l'infra-rouge moyen ou l'infra-rouge lointain, le filtre proposé dans le document [2] devient trop absorbant, et est donc inutilisable.

En outre, cette méthode est basée sur une technique de formation de couches minces de matériaux diélectriques et/ou semi-conducteurs sur des flancs du guide d'onde ou du dispositif optique. Or, lesdits flancs constituent des surfaces chimiquement hétérogènes (du fait de la présence du coeur et de la gaine du guide d'onde), et rendent donc la formation de couches minces difficilement contrôlable en termes d'épaisseur et d'homogénéité chimique.

Le but de l'invention est donc de proposer un dispositif optique comprenant un guide d'onde pourvu d'un filtre dont l'indice de réfraction n'est pas imposé par l'indice de réfraction effectif du mode guidé par ledit guide d'onde.

Un autre but de l'invention est également de proposer un dispositif optique comprenant un guide d'onde pourvu d'un filtre présentant une meilleure homogénéité chimique.

Un autre but de l'invention est également de proposer un dispositif optique comprenant un guide d'onde pourvu d'un filtre également compatible avec des applications dans les gammes de l'infra-rouge moyen et de l'infra-rouge lointain.

## EXPOSÉ DE L'INVENTION

Les buts de l'invention sont au moins en partie atteints par un dispositif optique selon l'invention, comme défini par la revendication 1.

Ainsi, le dispositif selon l'invention permet de simplifier la fabrication de la lame filtre au regard de l'art antérieur. En effet, le dispositif selon l'invention ne nécessite pas un dépôt de couche mince. Par conséquent, le problème d'inhomogénéité d'épaisseur ou de composition chimique des couches minces ne sont plus rencontrés dans le cadre de la présente invention.

Par ailleurs, la lame filtre peut être faite d'air ou de vide et peut convenir pour conférer au guide d'onde, en fonction des grandeurs $e_{slit}$ et $e_{slab}$, toute la plage de coefficient de transmission T compris entre 100 % et des valeurs proches de 0 % (par exemple 1 %). Autrement dit pour chaque valeur de coefficient de transmission T compris entre 100 % et des valeurs proches de 0 %, il existe un couple de valeurs $e_{slit}$ et $e_{salb}$ associé à la lame filtre. Le problème de trouver un matériau avec un indice de réfraction particulier pour une application à une longueur d'onde donnée ne se pose plus.

En outre, l'utilisation d'une lame filtre faite d'air ou de vide ouvre la voie à des applications dans l'infrarouge moyen et l'infrarouge lointain.

Selon un mode de réalisation, le guide d'onde est un guide d'onde planaire dont le coeur est une couche intercalée entre deux couches gaines comprenant, chacune, un matériau gaine d'indice de réfraction $n_g$ inférieur à $n_c$.

Selon un mode de réalisation, le coeur comprend une première section transversale $S_{c1}$ selon un plan orthogonal à la première direction A, la lame filtre étant, essentiellement, parallèle à la première section transversale $S_{c1}$, et couvrant au moins ladite première section transversale $S_{c1}$, avantageusement la lame filtre s'étend également dans les deux couches gaines.

Selon un mode de réalisation, le coeur s'étend sur une longueur L parallèle à la première direction A, et présente une seconde section transversale $S_{c2}$ de forme rectangulaire, le coeur étant entouré d'un matériau gaine d'indice de réfraction $n_g$ inférieur à $n_c$.

Selon un mode de réalisation, la lame filtre est, essentiellement, parallèle à la seconde section transversale $S_{c2}$, et couvre au moins ladite seconde section transversale $S_{c2}$, avantageusement la lame filtre s'étend également dans le matériau gaine.

Selon un mode de réalisation, le guide d'onde est monomode

Selon un mode de réalisation, le guide d'onde est un laser.

L'invention comprend également un procédé de fabrication selon la revendication 7.

Ainsi, le procédé selon l'invention permet de simplifier la fabrication de la lame filtre au regard de l'art antérieur. En effet, le procédé selon l'invention ne nécessite pas un dépôt de couche mince. Par conséquent, le problème d'inhomogénéité d'épaisseur ou de composition chimique des couches minces ne sont plus rencontrés dans le cadre de la présente invention.

Par ailleurs, la lame filtre peut être faite d'air ou de vide et peut convenir pour conférer au guide d'onde, en fonction des grandeurs $e_{slit}$ et $e_{slab}$, toute la plage de coefficient de transmission T compris entre 100 % et des valeurs proches de 0 % (par exemple 1 %). Autrement dit pour chaque valeur de coefficient de transmission T compris entre 100 % des valeurs proches de 0 %, il existe un couple de valeurs $e_{slit}$ et $e_{salb}$ associé à la lame filtre. Le problème de trouver un matériau avec un indice de réfraction particulier pour une application à une longueur d'onde donnée ne se pose plus.

En outre, l'utilisation d'une lame filtre faite d'air ou de vide ouvre la voie à des applications dans l'infrarouge moyen et l'infrarouge lointain.

Selon un mode de réalisation, la formation de la lame filtre est précédée d'une étape de sélection du premier coefficient de transmission $T_1$ parmi un premier ensemble de valeurs de coefficients de transmission T, le premier ensemble de valeurs de coefficients de transmission T étant déterminé selon un ensemble de valeurs de premières épaisseurs $e_{slit}$ de la lame filtre et un ensemble de première distances $e_{slab}$ de la lame filtre par rapport à la facette de sortie, le premier ensemble de valeurs de coefficients de transmission T étant avantageusement déterminé par un calcul.

Selon un mode de réalisation, le coeur comprend une première section transversale $S_c$ selon un plan orthogonal à la première direction A, la lame filtre étant, essentiellement, parallèle à la section transversale $S_c$, et couvrant au moins ladite section transversale $S_c$.

Selon un mode de réalisation, le premier coefficient de transmission $T_1$ est supérieur à un coefficient de transmission $T_d$ du guide d'onde dépourvu de lame filtre.

Selon un mode de réalisation, le premier coefficient de transmission $T_1$ est supérieur à 80 %, de préférence supérieur à 90 %.

Selon un mode de réalisation, le guide d'onde est un guide d'onde planaire dont le coeur est une couche intercalée entre deux couches gaines comprenant, chacune, un matériau gaine d'indice de réfraction $n_g$ inférieur à $n_c$.

Selon un mode de réalisation, le coeur comprend une première section transversale Sc1 selon un plan orthogonal à la première direction A, la lame filtre étant, essentiellement, parallèle à la première section transversale $S_{c1}$, et couvrant au moins ladite première section transversale $S_{c1}$, avantageusement la lame filtre s'étend également dans les deux couches gaines.

Selon un mode de réalisation, avant la formation de la lame filtre, le coeur s'étend sur une longueur L parallèle à la première direction A, et présente une seconde section transversale $S_{c2}$ de forme rectangulaire, le coeur étant entouré d'un matériau gaine d'indice de réfraction $n_g$ inférieur à $n_c$.

Selon un mode de réalisation, la lame filtre est, essentiellement, parallèle à la seconde section transversale $S_{c2}$, et couvre au moins ladite seconde section transversale $S_{c2}$, avantageusement la lame filtre s'étend également dans le matériau gaine.

## BRÈVE DESCRIPTION DES DESSINS

La présente invention sera mieux comprise sur la base de la description qui va suivre et des dessins en annexe sur lesquels:

- la figure 1 est un schéma représentatif en perspective d'un guide d'onde pourvu d'un filtre antireflet connu de l'état de la technique,
- la figure 2 est un schéma représentatif en perspective d'un guide d'onde planaire, comprenant une couche coeur intercalée entre deux couches gaines et connu de l'état de la technique,
- la figure 3 est un schéma représentatif en perspective d'un guide d'onde canal, comprenant un coeur (en forme de canal) et entouré d'un matériau gaine et connu de l'état de la technique,
- la figure 4 est un schéma représentatif en perspective d'un guide d'onde canal, mettant en oeuvre une lame filtre selon la présente invention, la lame filtre est disposée dans le guide d'onde, sur le trajet d'un rayonnement susceptible d'être guidé par ledit guide d'onde,

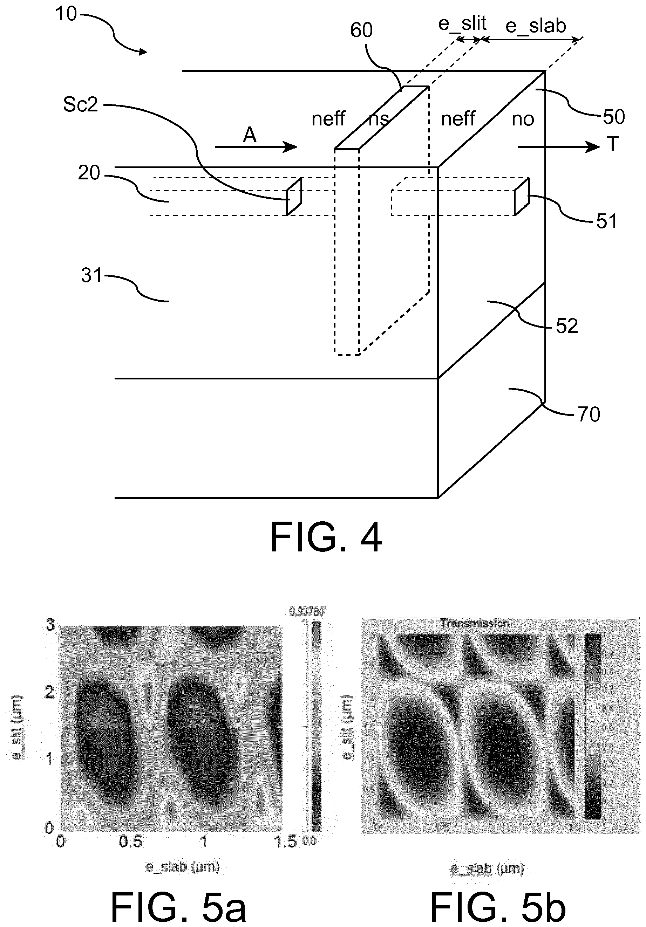

- les figures 5a et 5b représentent une cartographie du coefficient de transmission d'un guide d'onde pourvu d'une lame filtre, pour une longueur d'onde λ, selon l'invention, la cartographie étant calculée selon la méthode numérique (« Finite Différence Time Domain Method » ou « FDTD » (figure 5a) et selon le modèle analytique (figure 5b), les nuances de gris indiquent l'amplitude du coefficient de transmission du guide d'onde en fonction de l'épaisseur $e_{slit}$ (représentée sur l'axe vertical) de la lame filtre et de la distance $e_{slab}$ (représentée sur l'axe horizontal) entre ladite lame et la facette de sortie du guide d'onde,
- les figures 6, 7 et 8 représentent chacune une cartographie du coefficient de transmission d'un guide d'onde pourvu d'une lame filtre, pour une longueur d'onde λ, selon un mode de réalisation de l'invention, les nuances de gris indiquent l'amplitude du coefficient de transmission du guide d'onde en fonction de l'épaisseur $e_{slit}$ (représentée sur l'axe vertical) de la lame filtre et de la distance $e_{slab}$ (représentée sur l'axe horizontal) entre ladite lame et la facette de sortie du guide d'onde.

## EXPOSÉ DÉTAILLÉ DE MODES DE RÉALISATION PARTICULIERS

L'invention décrite de manière détaillée ci-dessous met en oeuvre la formation d'un filtre comprenant une lame filtre dans un guide d'onde. La lame filtre est disposée sur le trajet d'un rayonnement lumineux guidé par le guide d'onde, et est destinée à modifier le coefficient de transmission du guide d'onde. A cet égard, il apparaîtra plus clairement dans la description que tant l'épaisseur de la lame filtre que sa disposition dans le guide d'onde permettent d'ajuster le coefficient de transmission du guide pour un rayonnement d'une longueur donnée.

Pour les différents modes de mise en oeuvre, les mêmes références seront utilisées pour des éléments identiques ou assurant la même fonction, par souci de simplification de la description.

Sur les figures 4 à 8, on peut voir des exemples de mise en oeuvre d'un procédé de fabrication d'un filtre pour un guide d'onde.

Le procédé de fabrication d'un filtre pour un guide d'onde 10 comprend une première étape de fourniture d'un guide d'onde 10.

Le guide d'onde 10 peut être un guide d'onde 10 planaire (« Planar waveguide » selon la terminologie Anglo-Saxonne) ou un guide d'onde 10 canal (« Ridge waveguide » selon la terminologie Anglo-Saxonne).

Le guide d'onde 10, planaire ou canal, est destiné à guider un rayonnement lumineux quasi monochromatique, d'une longueur d'onde centrale $\lambda$, selon une première direction A. Nous notons que la première direction A n'est pas nécessairement rectiligne.

Par rayonnement lumineux quasi monochromatique, nous entendons un rayonnement lumineux comprenant une bande spectrale d'étendue $\Delta\lambda < \lambda/10$ centrée sur une longueur d'onde centrale $\lambda$.

De manière avantageuse, le rayonnement lumineux peut être monochromatique de longueur d'onde $\lambda$ (dans ce cas de figure, nous assimilons la longueur d'onde centrale $\lambda$ à la longueur d'onde $\lambda$ du rayonnement monochromatique).

De manière avantageuse, la longueur d'onde centrale $\lambda$ peut être comprise entre 0.4 $\mu$m et 14 $\mu$m, de préférence comprise entre 3 $\mu$m et 14 $\mu$m.

Les gammes de longueurs d'ondes 3 $\mu$m - 8 $\mu$m et 8 $\mu$m - 14 $\mu$m sont, respectivement, appelées infrarouge moyen (« Mid Wave length InfraRed » ou « MWIR » selon la terminologie Anglo-Saxonne) et infrarouge lointain (« Long Wave length InfraRed » ou « LWIR » selon la terminologie Anglo-Saxonne).

Nous entendons par guide d'onde 10 planaire (représenté en figure 2), un guide 10 comprenant une couche coeur 20 (« Core layer » selon la terminologie Anglo-Saxonne) intercalée entre deux couches gaines 30 et 40 (« Cladding layer» selon la terminologie Anglo-Saxonne). Dans la suite de l'énoncé, nous emploierons le terme « coeur 20 » pour désigner la couche coeur 20. Nous emploierons également le terme « gaine 31 » pour désigner les deux couches gaines 30 et 40 (nous étendrons également cette notion au guide d'onde canal pour lequel le canal est entouré d'une gaine). Le coeur 20 du guide d'onde 10 planaire comprend une première section transversale $S_{c1}$ selon un plan orthogonal à la première direction A. Le coeur 20 du guide d'onde a une épaisseur $E_c$, la couche gaine 30 une épaisseur $E_{gi}$ et la couche gaine 40 une épaisseur $E_{gs}$. Par épaisseur d'une couche, nous entendons l'épaisseur selon la direction perpendiculaire au plan formé par la couche. Plus précisément et en référence à la figure 1, l'épaisseur d'une couche est prise selon la direction Z.

Nous entendons par guide d'onde 10 canal (représenté en figure 3), un guide d'onde 10 comprenant un coeur 20 en forme de canal, s'étendant sur une longueur L, et enrobé dans une gaine 31. Le coeur 20 du guide d'onde 10 canal comprend une seconde section transversale $S_{c2}$ selon un plan orthogonal à la première direction A. La seconde section $S_{c2}$ peut être de forme rectangulaire, triangulaire, semi circulaire. Cependant, l'invention ne se limite pas une forme particulière de la seconde section transversale $S_{c2}$.

Le guide d'onde 10 comprend également un facette de sortie 50. La facette de sortie 50 peut être planaire et essentiellement orthogonale à la première direction A. Par essentiellement orthogonale, nous entendons que la première direction A peut présenter une légère déviation angulaire par rapport à la direction normale (ou orthogonale) à la première facette 50. La légère déviation angulaire peut être comprise entre -5 et +5°.

Le coeur 20 du guide d'onde 10 est avantageusement exposé à l'environnement extérieur au niveau de la facette de sortie 50.

L'environnement extérieur présente un indice de réfraction $n_0$. L'environnement extérieur est par exemple l'air, et présente alors un indice de réfraction égale à 1.

L'environnement extérieur peut également être un élément de couplage connecté au guide d'onde 10 au niveau de la facette de sortie 50.

L'exposition du coeur 20 à l'environnement extérieur permet un couplage aisé du guide d'onde 10 avec d'autres dispositifs optiques.

La facette de sortie 50 est une face du guide d'onde 10 par laquelle le rayonnement lumineux, guidé par le guide d'onde 10, est transmis vers l'environnement extérieur. Autrement dit la facette de sortie 50 est une frontière entre l'environnement extérieur et le guide d'onde 10.

Le coeur 20 du guide d'onde 10 comprend un matériau coeur d'indice de réfraction $n_c$ à la longueur d'onde $\lambda$.

La gaine 31 du guide d'onde 10 comprend un matériau gaine d'indice de réfraction $n_g$ à la longueur d'onde $\lambda$.

Dans la suite de l'énoncé, par souci de simplification, nous omettrons l'expression « à la longueur d'onde $\lambda$ » dans l'expression « indice de réfraction $n_g$ à la longueur d'onde $\lambda$ ».

Par ailleurs, afin d'assurer le confinement du rayonnement lumineux mono chromatique ou quasi monochromatique, et de longueur d'onde centrale $\lambda$, l'indice de réfraction $n_c$ du matériau coeur est supérieur à l'indice de réfraction $n_g$ du matériau gaine.

La conception d'un guide d'onde 10 planaire ou canal étant à la portée de l'homme du métier, elle ne sera pas décrite dans la présente description.

De manière avantageuse, la guide d'onde 10 est un guide d'onde monomode.

Par guide d'onde monomode, nous entendons un guide d'onde dans lequel un seul mode optique de longueur d'onde $\lambda$, peut se propager. A cet égard, l'homme du métier pourra trouver dans le document [1], cité à la fin de la description, une description des modes optiques susceptibles de se propager dans le guide d'onde.

Le guide d'onde 10 dépourvu de lame filtre 60 (la lame filtre 60 est décrite plus en détails dans la suite de l'énoncé), guide donc le rayonnement lumineux quasi monochromatique, d'une longueur d'onde centrale $\lambda$, selon la première direction A, et transmet ledit rayonnement au travers de la facette de sortie 50 du guide d'onde 10 vers l'environnement extérieur, d'indice de réfraction $n_s$, selon un coefficient de transmission T.

Le coefficient de transmission T au travers de la facette 50 du guide d'onde 10 est le rapport entre l'intensité du rayonnement lumineux transmis par la facette de sortie 50 et l'intensité du rayonnement lumineux guidé dans le guide d'onde et incident sur la facette de sortie 50.

La valeur du coefficient de transmission T est imposée par les indices de réfraction des matériaux coeur, gaine et de l'environnement extérieur. L'homme du métier peut facilement déterminer le coefficient de transmission T d'un guide d'onde sans qu'il soit nécessaire de décrire plus en détails cette notion dans la description.

De manière avantageuse, le coeur 20 peut comprendre au moins un des matériaux coeur choisi parmi : le silicium, un alliage de silicium germanium, du nitrure de silicium (répondant à la formule chimique $Si_3N_4$), du germanium, du $TiO_2$.

Toujours de manière avantageuse, la gaine 31 peut comprendre au moins un des matériaux gaine choisi parmi : le silicium, un alliage de silicium germanium, l'oxyde de silicium (répondant à la formule chimique $SiO_2$), du germanium, du nitrure de silicium (répondant à la formule chimique $Si_3N_4$), du $TiO_2$, du ZnS, de l'$Al_2O_3$, de l'AlN.

Le procédé selon l'invention comprend également une étape de formation d'un lame filtre 60 dans le guide d'onde 10.

Par lame, nous entendons une couche fine comprenant deux faces principales essentiellement parallèles, préférentiellement parallèles. Les faces principales sont reliées par une surface contour. Ainsi, dès lors que l'orientation d'une lame est évoquée dans la présente description, il est fait référence à la manière dont ses faces principales sont orientées. A cet égard, une lame disposée orthogonalement à une direction signifie que ladite direction est orthogonale aux faces principales de ladite lame. De la même manière, une lame disposée parallèlement à une direction signifie que ladite direction est parallèle aux faces principales de ladite lame. Par ailleurs, la lame a une épaisseur $e_{slit}$ mesurée selon la direction orthogonale à ses faces principales.

La lame filtre 60 peut présenter un indice de réfraction $n_s$.

La lame filtre 60 est essentiellement parallèle à la facette de sortie 50, et à une distance $e_{slab}$ de ladite facette 50.

Nous notons dès à présent que la lame filtre 60 est disposée dans le volume du guide d'onde. Un partie de la surface contour de la lame filtre peut être en affleurement d'une face exposée de la gaine 31.

Autrement dit, les faces principales de la lame filtre 60 ne sont pas exposées à l'environnement extérieur. Ainsi, la lame filtre 60 se trouve sur le trajet du rayonnement lumineux dans le guide d'onde 10.

Ainsi, dès lors que la lame filtre 60 est disposée dans le guide d'onde 10, une modification du coefficient de transmission T du guide d'onde 10 au travers de la facette de sortie 50 est observée.

Il est ainsi possible d'ajuster le coefficient de transmission T à une valeur d'un premier coefficient de transmission $T_1$ par insertion de la lame filtre 60 dans le guide d'onde 10.

Par ailleurs, la valeur du premier coefficient de transmission $T_1$ dépend des grandeurs suivantes : l'indice de réfraction effectif du mode ($n_{eff}$), l'indice de réfraction de l'environnement extérieur ($n_0$), l'indice de réfraction de la lame filtre ($n_s$), l'épaisseur de la lame filtre ($e_{slit}$), la distance de la lame filtre ($e_{slab}$) par rapport à la facette de sortie 50.

La lame filtre 60 peut comprendre au moins un des matériaux choisis parmi : air, $SiO_2$, SiN, $Al_2O_3$, AlN.

La formation de la lame filtre 60 peut être réalisée par une étape de gravure.

Par exemple, il peut s'agir d'une étape de gravure sèche, par plasma par exemple. L'étape de gravure sèche peut être précédée d'une étape de photolithographie destinée à délimiter le motif de la lame filtre 60. Ces techniques sont connues de l'homme du métier et ne sont donc pas décrites dans l'exposé de l'invention.

Dès lors que la lame filtre 60 comprend un matériau solide (i.e. autre que de l'air ou de vide), sa formation implique une étape de dépôt dudit matériau solide dans la cavité formée par gravure, par exemple une étape de dépôt en phase vapeur par voie chimique ou physique.

La formation de la lame filtre 60 par une étape de dépôt peut être suivie d'une étape de polissage mécano-chimique (« Chemical-Mechanical-Polishing » ou « CMP » selon la terminologie Anglo-Saxonne) de manière à retirer les excès de matériau formés lors de l'étape de dépôt.

Avantageusement, la lame filtre 60 couvre au moins une section transversale $S_c$ du coeur 20 du guide d'onde 10.

La section transversale $S_c$ du coeur 20 est l'intersection du coeur 20 avec un plan perpendiculaire à la première direction A.

Dans le cas d'un guide d'onde 10 planaire, la section transversale $S_c$ est la première section transversale $S_{c1}$.

Dans le cas d'un guide d'onde 10 canal, la section transversale $S_c$ est la seconde section transversale $S_{c2}$.

Ainsi, dès lors que la lame filtre 60 couvre au moins la section transversale du coeur $S_c$, au moins 80 % de la surface du mode optique guidé par la guide d'onde 10 est couvert par la lame filtre 60.

De manière particulièrement avantageuse, la lame filtre 60 s'étend dans la gaine 31 du guide d'onde 10. Toujours de manière avantageuse, la lame filtre 60 couvre au moins toute la surface du mode optique destiné à être guidé dans le guide d'onde 10.

Par surface du mode optique, on entend la surface dans laquelle se trouve 99 % de l'énergie optique. La densité d'énergie optique est définie par $0,5 \times \varepsilon \times (\mathrm{abs}(E))^2$ ; où abs(E) est la norme du champ électrique, $\varepsilon$ est la permittivité locale, définie comme l'indice de réfraction local à la puissance 2 ($\varepsilon = n{\wedge}2$). L'intégrale de la densité d'énergie sur la surface du mode fait 99 % de l'intégrale dans tout l'espace (On appelle tout l'espace en fait une section 2D infinie perpendiculaire au guide).

De manière particulièrement avantageuse, la lame filtre 60 peut être faite d'air ou de vide.

En effet, d'un point de vue fabrication de la lame filtre 60 comprenant de l'air ou du vide, il n'est nul besoin d'avoir recours à une étape de formation de couches minces de matériaux diélectriques et/ou semi-conducteurs sur des flancs du guide d'onde ou du dispositif optique. Ainsi, les problèmes associés aux inhomogénéités de composition chimique ou d'épaisseur de la lame filtre ne sont pas rencontrés dans le cadre de la présente invention.

Par ailleurs, la formation de la lame filtre 60 peut ne nécessiter qu'une étape de gravure.

Par exemple, il peut s'agir d'une étape de gravure sèche, par plasma par exemple. L'étape de gravure sèche peut être précédée d'une étape de photolithographie destinée à délimiter le motif de la lame filtre 60. Ces techniques sont connues de l'homme du métier et ne sont donc pas décrites dans l'exposé de l'invention.

Par ailleurs, l'air et le vide sont peu ou pas absorbants, et peuvent donc être utilisés dans les gammes de longueurs d'ondes 3 $\mu$m - 8 $\mu$m et 8 $\mu$m -14 $\mu$m. En effet, dans ces gammes de longueurs d'ondes il n'existe pas de matériaux transparents.

A titre d'exemple de mise oeuvre du procédé de fabrication du filtre pour le guide d'onde, nous considérons le guide d'onde 10 canal illustré à la figure 4. Dans cet exemple, le guide d'onde 10 est monomode à la longueur d'onde $\lambda$, et l'indice de réfraction effectif du mode est $n_{eff}$.

Le coeur 20 du guide d'onde 10 canal comprend une seconde section transversale $S_{c2}$ de forme carrée (l'exemple n'est cependant pas limité à cette forme de section, tout autre forme peut être considérée sans avoir à modifier ce qui est décrit), et est entouré d'un matériau gaine. La première direction A est orientée selon la direction d'extension du coeur 20. La facette de sortie 50 comprend une région coeur 51 et une région gaine 52. La région coeur 51 est une section transversale du coeur 20 exposée à l'environnement extérieur au niveau de la facette de sortie 50. La région gaine 52 est une section transversale de la gaine 31 exposée à l'environnement extérieur au niveau de la facette de sortie 50. Le guide d'onde 10 peut être formé sur un substrat 70, en silicium par exemple. Le guide d'onde 10 peut être formé par une combinaison de techniques de dépôt de couches minces par épitaxie, et de techniques de gravure destinées à mettre en forme le canal du guide d'onde.

Dans l'exemple illustré à la figure 4, la lame filtre 60 est disposée dans le guide d'onde de manière à couvrir l'intégralité de la surface du mode optique se propageant dans le guide d'onde 10.

Nous allons maintenant analyser l'influence des paramètres liés à la lame filtre 60 sur le coefficient de transmission T du guide d'onde 10.

A cet égard, la Demanderesse a démontré que le coefficient de transmission T du guide d'onde 10 suit un modèle analytique selon la relation mathématique (1) suivante :

$$(1)$$

$$T = \frac{64\, n_{eff}{}^3 n_s{}^2 n_0}{\left| (n_{eff} + n_0)\left[ (n_{eff} + n_s)^2 - (n_{eff} - n_s)^2 A \right] - (n_{eff}^2 - n_s^2)(n_{eff} - n_O)B(1-A) \right|^2}$$

avec

$$A = e^{\frac{i4\pi n_s e_{slit}}{\lambda}} \quad (2)$$

$$B = e^{\frac{i4\pi n_{eff} e_{slab}}{\lambda}} \quad (3)$$

La relation mathématique (1) permet ainsi de calculer une cartographie du coefficient de transmission T en fonction des grandeurs $e_{slit}$ et $e_{slab}$ et a été comparée à un modèle numérique dit FDTD (« Finite Différence Time Domain Method »). A cet égard, l'homme du métier pourra consulter le document [3] cité à la fin de la description.

La comparaison entre le modèle analytique (1) et le modèle FDTD est illustré aux figures 5a et 5b. Les figures 5a et 5b représentent la cartographie du coefficient de transmission T pour un guide d'onde 10 canal. Le coeur 20 du guide est en SiGe (comprenant 40 % de Ge), et présente une seconde section transversale carrée $S_{c2}$ de 3 $\mu$m * 3 $\mu$m, la longueur d'onde centrale $\lambda$ vaut 4,5 $\mu$m. La gaine 31 est en silicium. L'indice de réfraction effectif du mode est $n_{eff}$ = 3,5. La cartographie du coefficient de transmission T du guide d'onde 10 est déterminée pour des valeurs de $e_{slit}$ variant entre 0 et 3 $\mu$m, et des valeurs de $e_{slab}$ variant entre 0 et 1,5 $\mu$m (la lame filtre étant faite d'air). Nous constatons que les deux cartographies sont très similaires, ce qui permet de valider le modèle analytique. Il faut par ailleurs noter que le modèle analytique permet de dresser la cartographie du coefficient de transmission du guide d'onde 10 pourvu de la lame filtre 60 en quelques secondes, alors que plusieurs jours, voire semaines, sont nécessaires pour obtenir le même résultat avec la méthode FDTD.

La cartographie représentée aux figures 5a et 5b démontre aussi très clairement qu'il est possible d'atteindre toutes les valeurs comprises entre 0 et 100 % pour le coefficient de transmission $T_1$ du guide d'onde 10. Chaque valeur du coefficient de transmission $T_1$ est alors déterminée par au moins un couple de valeurs $e_{slit}$ et $e_{slab}$.

Autrement dit, selon l'invention, en fonction de la valeur de coefficient de transmission $T_1$ cible, il existe au moins un couple de valeurs $e_{slit}$ et $e_{slab}$ permettant d'atteindre ladite cible.

Plus particulièrement, quel que soit la valeur de coefficient de transmission $T_1$ cible, un lame filtre 60 faite d'air ou de vide, associée à un couple de valeurs de $e_{slit}$ et $e_{slab}$ donné, peut être mise en oeuvre. Une lame d'air ou de vide présente les avantages suivants :

- il n'est pas nécessaire de chercher un matériau présentant un indice de réfraction donné, la lame filtre 60 présente ainsi un caractère plus universel,
- l'air et le vide ne sont pas absorbants dans la gamme de longueurs d'ondes comprises entre 3 et 14 $\mu$m,
- la lame filtre 60 est homogène (chimiquement et en épaisseur) contrairement au filtre connu de l'art antérieur et discuté dans le document [2],
- la lame filtre 60 permet d'obtenir un coefficient de transmission de 100 % également dans l'infrarouge moyen et l'infrarouge lointain (entre 3 et 14 $\mu$m), ce qui n'est pas possible avec le filtre antireflet présenté dans le document [2].

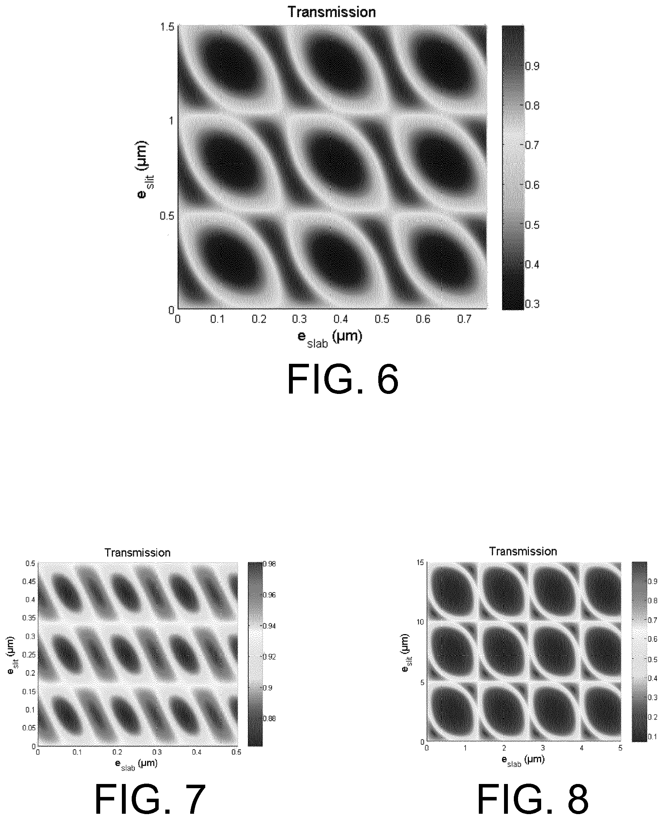

Les figures 6, 7 et 8 présentent d'autres cartographies de coefficient de transmission T pour d'autres guides d'ondes 10 canaux.

A la figure 6, le coeur 20 du guide est en silicium, et présente une seconde section transversale de 300nm * 300 nm, la longueur d'onde centrale $\lambda$ vaut 1,55 $\mu$m. La gaine est en oxyde de silicium. L'indice de réfraction effectif du mode est $n_{eff}$ = 3. La lame filtre 60 comprend de l'oxyde de silicium. La cartographie du coefficient de transmission T du guide d'onde 10 est déterminée pour des valeurs de $e_{slit}$ variant entre 0 et 1,5 $\mu$m, et des valeurs de $e_{slab}$ variant entre 0 et 0,75 $\mu$m.

A la figure 7, le coeur 20 du guide est en nitrure de silicium, et présente une seconde section transversale de 250nm * 250 nm, la longueur d'onde centrale $\lambda$ vaut 0,5 $\mu$m. La gaine est en oxyde de silicium. L'indice de réfraction effectif du mode est $n_{eff}$ = 1,7. La lame filtre 60 comprend de la silice (oxyde de silicium, $n_s$=1,5) La cartographie du coefficient de transmission T du guide d'onde 10 est déterminée pour des valeurs de $e_{slit}$ variant entre 0 et 0,5 $\mu$m, et des valeurs de $e_{slab}$ variant entre 0 et 0,5 $\mu$m.

A la figure 8, le coeur 20 du guide est en germanium, et présente une seconde section transversale de 3,5 $\mu$m * 3,5 $\mu$m, la longueur d'onde centrale $\lambda$ vaut 10 $\mu$m. La gaine est en SiGe. L'indice de réfraction effectif du mode est $n_{eff}$ = 3,8. La lame filtre 60 comprend de l'air. La cartographie du coefficient de transmission T du guide d'onde 10 est déterminée pour des valeurs de $e_{slit}$ variant entre 0 et 15 $\mu$m, et des valeurs de $e_{slab}$ variant entre 0 et 5 $\mu$m.

Dans ces trois cas de figure, nous pouvons observer que toute la gamme de coefficient de transmission T comprise entre 100 % et des valeurs proches de 0 % (par exemple 0,5 % ou 1 %) peut être atteinte.

Dans le cadre de la présente invention, la formation de la lame filtre 60 peut être précédée d'une étape de sélection du coefficient de transmission $T_1$ parmi un premier ensemble de valeurs de coefficients de transmission T. La valeur du coefficient de transmission $T_1$ est bien entendue la valeur du coefficient de transmission T que nous désirons conférer au guide d'onde 10. Cette valeur de $T_1$ peut être comprise entre 0 et 100 %. Par exemple, dès lors que nous avons pour dessein de transmettre un signal optique vers l'environnement extérieur et limiter les pertes optiques (autrement dit limiter les réflexions parasites), il est intéressant de choisir une valeur de $T_1$ supérieure au coefficient de transmission $T_d$ du guide d'onde 10 dépourvu de lame filtre 60.

De manière avantageuse la valeur du coefficient $T_1$ peut être supérieure à 80 %, préférentiellement supérieure à 90 %, par exemple, 95 % ou 100 %.

Toujours dans le cadre de la présente invention, le premier ensemble de valeurs de coefficients de transmission T susmentionné peut être déterminé selon un ensemble de valeurs de premières épaisseurs $e_{slit}$ de la lame filtre 60 et un ensemble de première distances $e_{slab}$ de la lame filtre 60 par rapport à la facette de sortie 50.

L'ensemble de premières distances $e_{slab}$ peut être compris en 0 et 1,5 fois la longueur d'onde centrale $\lambda$ du rayonnement lumineux destiné à être guidé dans le guide d'onde 10.

L'ensemble de valeurs de premières épaisseurs $e_{slit}$ peut être compris en 0 et 1,5 fois la longueur d'onde centrale $\lambda$ du rayonnement lumineux destiné à être guidé dans le guide d'onde 10.

De manière avantageuse, le premier ensemble de valeurs de coefficients de transmission T est avantageusement déterminé par un calcul, par exemple un calcul permettant de construire une cartographie avec la relation mathématique (1). Autrement dit, la sélection du couple de valeurs $e_{slit}$ et $e_{slab}$ est exécuté en fonction d'une valeur $T_1$ cible identifiée sur la cartographie de coefficient de transmission T.

Le guide d'onde 10 selon l'invention peut également comprendre un guide LASER. Par guide LASER, nous entendons un élément adapté pour émettre un rayonnement LASER. Le milieu à gain du laser peut avantageusement être compris dans le coeur 20 du guide d'onde. Le guide LASER est avantageusement un LASER solide, comme un laser à semi-conducteurs III-V fonctionnant dans le visible ou le proche infrarouge, ou un laser à cascade quantique III-V fonctionnant dans le moyen et lointain infrarouge. Un LASER solide peut également nécessiter un ajustement du coefficient de transmission T au niveau de sa facette d'émission du rayonnement LASER (équivalent à la facette de sortie 50 du guide d'onde). Un LASER solide comprend généralement deux miroirs disposés aux deux extrémités d'un guide d'onde canal. Un des deux miroirs, le premier miroir, a un coefficient de réflexion de 100 %, tandis que l'autre miroir, le second miroir, a un coefficient de transmission, non nul, et compris en 10 et 99 %, par exemple 70 %. Le second miroir est le miroir à partir duquel est émis le rayonnement LASER. Toujours dans le cadre de la présente invention, le guide laser peut comprendre un LASER solide (A cet égard l'homme du métier pourra consulter le document [4]). La lame filtre 60 est alors préférentiellement faite d'air ou de vide. Les valeurs $e_{slit}$ et $e_{slab}$ sont choisies pour que le coefficient de transmission T du guide d'onde 10 au niveau de la facette 50 soit compris entre 10 et 99 %, par exemple 70 %. La combinaison de la facette de sortie 50 du guide d'onde avec la lame filtre 60, disposée à la distance $e_{slab}$ par rapport à ladite facette de sortie 50, peut être assimilé au second miroir.

Le dispositif optique comprenant le guide d'onde 10 et la lame filtre peut reprendre toutes les caractéristiques décrites dans le procédé fabrication du filtre.

Ainsi, l'invention décrit un guide d'onde 10 comprenant une lame filtre 60 présentant une homogénéité et un coefficient d'absorption suffisamment faible, voire nul, pour ouvrir la voie à des applications dans les domaines de l'infrarouge moyen et lointain.

Par ailleurs, la fabrication de la lame filtre 60 est plus simple que la mise en place d'un filtre antireflet sur la facette de sortie.

## RÉFÉRENCES

[1] Katsunari Okamoto, "Fundamentals of optical waveguides", ISBN: 978-0-12-525096-2,
[2] US 2013/0084038,
[3] K. S. Yee, "Numerical solution of initial boundary value problems involving Maxwell's equations in isotropic média", IEEE Trans. Antennas Propag. 14, 3, 302-307 (1966),
[4] T. Aellen et al., « Continuous-wave distributed-feedback quantum-cascade lasers on a Peltier cooler », APPLIED PHYSICS LETTERS 83, pp 1929-1931 (2003).

## Revendications

1. Dispositif optique comprenant :

   - un guide d'onde (10), comprenant un coeur (20) d'indice de réfraction $n_c$, destiné à guider un rayonnement lumineux quasi monochromatique, d'une longueur d'onde centrale $\lambda$, dans un mode propagé d'indice effectif $n_{eff}$, selon une première direction A et à transmettre ledit rayonnement au travers d'une facette de sortie (50) du guide d'onde (10) vers l'environnement extérieur, d'indice de réfraction $n_0$ à la longueur d'onde centrale $\lambda$, $n_0$ étant différent de $n_{eff}$, selon un coefficient de transmission T, la facette de sortie (50) étant essentiellement perpendiculaire à la première direction A, le dispositif optique étant **caractérisé par** ce qu'il comprend également

- une lame filtre (60), d'indice de réfraction $n_s$ à la longueur d'onde centrale $\lambda$ $n_s$ étant différent de $n_{eff}$, avantageusement une lame d'air, disposée dans le guide d'onde (10), parallèlement à la facette de sortie (50) et à une première distance non nulle $e_{slab}$ de ladite facette de sortie (50), la lame filtre (60) présentant, selon la première direction A, une première épaisseur non nulle $e_{slit}$, la première distance $e_{slab}$ et la première épaisseur $e_{slit}$ étant adaptées pour que le coefficient de transmission T du guide d'onde (10) soit égal à un premier coefficient de transmission $T_1$ pour le mode propagé d'indice effectif $n_{eff}$ à la longueur d'onde centrale $\lambda$, le premier coefficient de transmission $T_1$ étant le rapport entre l'intensité du mode propagé transmis par la facette et l'intensité du mode propagé incident sur la lame filtre, le premier coefficient de transmission $T_1$ étant supérieur à un coefficient de transmission $T_d$ du guide d'onde (10) dépourvu de lame filtre (60), $T_d$ étant le rapport entre l'intensité du mode propagé transmis par la facette et l'intensité du mode propagé incident sur la facette.

2. Dispositif selon la revendication 1, dans lequel le guide d'onde (10) est un guide d'onde planaire dont le coeur (20) est une couche intercalée entre deux couches gaines (30 et 40) comprenant, chacune, un matériau gaine d'indice de réfraction $n_g$ inférieur à $n_c$.

3. Dispositif selon la revendication 2, dans lequel le coeur (20) comprend une première section transversale $S_{c1}$ selon un plan orthogonal à la première direction A, la lame filtre (60) étant, essentiellement, parallèle à la première section transversale $S_{c1}$, et couvrant au moins ladite première section transversale $S_{c1}$, la lame filtre (60) s'étendant avantageusement également dans les deux couches gaines (30 et 40).

4. Dispositif selon la revendication 1, dans lequel le coeur (20) s'étend sur une longueur L parallèle à la première direction A, et présente une seconde section transversale $S_{c2}$ de forme rectangulaire, le coeur (20) étant entouré d'un matériau gaine d'indice de réfraction $n_g$ inférieur à $n_c$.

5. Dispositif selon la revendication 4, dans lequel la lame filtre (60) est, essentiellement, parallèle à la seconde section transversale $S_{c2}$, et couvre au moins ladite seconde section transversale $S_{c2}$, la lame filtre (60) s'étendant avantageusement également dans le matériau gaine.

6. Dispositif selon l'une de revendications 1 à 5, dans lequel le guide d'onde (10) est monomode.

7. Procédé de fabrication d'un dispositif optique comprenant les étapes :

- la formation d'un guide d'onde (10), le guide d'onde (10) comprenant un coeur (20) d'indice de réfraction $n_c$, destiné à guider un rayonnement lumineux quasi monochromatique, d'une longueur d'onde centrale $\lambda$, dans un mode propagé d'indice effectif $n_{eff}$, selon une première direction A et à transmettre ledit rayonnement au travers d'une facette de sortie (50) du guide d'onde (10) vers l'environnement extérieur, d'indice de réfraction $n_0$ à la longueur d'onde centrale $\lambda$, $n_0$ étant différent de $n_{eff}$, selon un coefficient de transmission T, la facette de sortie (50) étant essentiellement perpendiculaire à la première direction A,
- la formation d'une lame filtre (60), d'indice de réfraction $n_s$ à la longueur d'onde centrale $\lambda$, $n_s$ étant différent de $n_{eff}$, avantageusement une lame d'air, dans le guide d'onde (10), parallèlement à la facette de sortie (50) et à une première distance $e_{slab}$ non nulle de ladite facette de sortie (50), la lame filtre (60) présentant, selon la première direction A, une première épaisseur non nulle $e_{slit}$, la première distance $e_{slab}$ et la première épaisseur $e_{slit}$ étant adaptées pour que le coefficient de transmission T du guide d'onde (10) soit égal à un premier coefficient de transmission $T_1$ pour le mode propagé d'indice effectif $n_{eff}$ à la longueur d'onde centrale $\lambda$, le premier coefficient de transmission $T_1$ étant le rapport entre l'intensité du mode propagé transmis par la facette et l'intensité du mode propagé incident sur la lame filtre, le premier coefficient de transmission $T_1$ étant supérieur à un coefficient de transmission $T_d$ du guide d'onde (10) dépourvu de lame filtre (60), $T_d$ étant le rapport entre l'intensité du mode propagé transmis par la facette et l'intensité du mode propagé incident sur la facette.

8. Procédé selon la revendication 7, dans lequel la formation de la lame filtre (60) est précédée d'une étape de sélection du coefficient de transmission $T_1$ parmi un premier ensemble de valeurs de coefficients de transmission T, le premier ensemble de valeurs de coefficients de transmission T étant déterminé selon un ensemble de valeurs de premières épaisseurs $e_{slit}$ de la lame filtre (60) et un ensemble de premières distances $e_{slab}$ de la lame filtre (60) par rapport à la facette de sortie (50), le premier ensemble de valeurs de coefficients de transmission T étant avantageusement déterminé par un calcul.

9. Procédé selon la revendication 7 ou 8, dans lequel la formation de la lame filtre (60) comprend une étape de gravure du guide d'onde (10), cette étape de gravure comprenant avantageusement une gravure sèche.

10. Procédé selon l'une des revendications 7 à 9, dans lequel, le premier coefficient de transmission $T_1$ est supérieur à 80 %, de préférence supérieur à 90 %.

11. Procédé selon l'une des revendications 7 à 10, dans lequel le guide d'onde (10) est un guide d'onde planaire dont le coeur (20) est une couche intercalée entre deux couches gaines (30 et 40) comprenant, chacune, un matériau gaine d'indice de réfraction $n_g$ inférieur à $n_c$.

12. Procédé selon la revendication 11, dans lequel le coeur (20) comprend une première section transversale $S_{c1}$ selon un plan orthogonal à la première direction A, la lame filtre (60) étant formée, essentiellement, parallèlement à la première section transversale $S_{c1}$, et couvrant au moins ladite première section transversale $S_{c1}$, la lame filtre (60) s'étendant avantageusement également dans les deux couches gaines (30 et 40).

13. Procédé selon l'une des revendications 7 à 10, dans lequel, avant la formation de la lame filtre, le coeur (20) s'étend sur une longueur L parallèle à la première direction A, et présente une seconde section transversale $S_{c2}$ de forme rectangulaire, le coeur (20) étant entouré d'un matériau gaine d'indice de réfraction $n_g$ inférieur à $n_c$.

14. Procédé selon la revendication 13, dans lequel la lame filtre (60) est, essentiellement, parallèle à la seconde section transversale $S_{c2}$, et couvre au moins ladite seconde section transversale $S_{c2}$, la lame filtre s'étendant avantageusement également dans le matériau gaine.

**Patentansprüche**

1. Optische Vorrichtung, enthaltend:

   - einen Wellenleiter (10), der einen Kern (20) mit einem Brechungsindex $n_c$ umfasst, der dazu bestimmt ist, eine quasimonochromatische Lichtstrahlung mit einer zentralen Wellenlänge $\lambda$ in einer Ausbreitungsmode mit effektivem Index $n_{eff}$ in einer ersten Richtung A zu leiten und diese Strahlung durch eine Austrittsfacette (50) des Wellenleiters (10) hindurch mit einem Brechungsindex $n_0$ bei der zentralen Wellenlänge $\lambda$ an die äußere Umgebung zu übertragen, wobei $\lambda$, $n_0$ von $n_{eff}$ verschieden ist, gemäß einem Transmissionskoeffizienten T, wobei die Austrittsfacette (50) im Wesentlichen senkrecht zur ersten Richtung A verläuft,

   wobei die optische Vorrichtung **dadurch gekennzeichnet ist, dass** sie ferner enthält:

   - eine Filterscheibe (60) mit Brechungsindex $n_s$ bei der zentralen Wellenlänge $\lambda$, wobei $n_s$ von $n_{eff}$ verschieden ist, vorteilhafterweise eine Luftscheibe, die in dem Wellenleiter (10) parallel zu der Austrittsfacette (50) und in einem ersten Abstand $e_{slab}$ ungleich Null von der Austrittsfacette (50) angeordnet ist, wobei die Filterscheibe (60) entlang der ersten Richtung A eine erste Dicke $e_{slit}$ ungleich Null aufweist, wobei der erste Abstand $e_{slab}$ und die erste Dicke $e_{slit}$ so ausgelegt sind, dass der Transmissionskoeffizient T des Wellenleiters (10) gleich einem ersten Transmissionskoeffizienten $T_1$ bei der Ausbreitungsmode mit effektivem Index $n_{eff}$ bei der zentralen Wellenlänge $\lambda$ ist, wobei der erste Transmissionskoeffizient $T_1$ das Verhältnis zwischen der Intensität der Ausbreitungsmode, die von der Facette übertragen wird, und der Intensität der auf der Filterscheibe einfallenden Ausbreitungsmode ist, wobei der erste Transmissionskoeffizient $T_1$ größer ist als ein Transmissionskoeffizient $T_d$ des Wellenleiters (10) ohne Filterscheibe (60), wobei $T_d$ das Verhältnis zwischen der Intensität der Ausbreitungsmode, die von der Facette übertragen wird, und der Intensität der auf der Facette einfallenden Ausbreitungsmode ist.

2. Vorrichtung nach Anspruch 1, wobei der Wellenleiter (10) ein planarer Wellenleiter ist, dessen Kern (20) eine Schicht ist, die zwischen zwei Mantelschichten (30 und 40) eingefügt ist, die jeweils ein Mantelmaterial mit einem Brechungsindex $n_g$ kleiner als $n_c$ aufweisen.

3. Vorrichtung nach Anspruch 2, wobei der Kern (20) einen ersten Querschnitt $S_{c1}$ in einer Ebene orthogonal zur ersten Richtung A aufweist, wobei die Filterscheibe (60) im Wesentlichen parallel zum ersten Querschnitt $S_{c1}$ verläuft und zumindest den ersten Querschnitt $S_{c1}$ abdeckt, wobei die Filterscheibe (60) vorteilhafterweise auch in die beiden Mantelschichten (30 und 40) hineinreicht.

**4.** Vorrichtung nach Anspruch 1, wobei sich der Kern (20) über eine Länge L parallel zur ersten Richtung A erstreckt und einen zweiten Querschnitt $S_{c2}$ von rechteckiger Form aufweist, wobei der Kern (20) von einem Mantelmaterial mit einem Brechungsindex $n_g$ kleiner als $n_c$ umgeben ist.

**5.** Vorrichtung nach Anspruch 4, wobei die Filterscheibe (60) im Wesentlichen parallel zum zweiten Querschnitt $S_{c2}$ verläuft und zumindest den zweiten Querschnitt $S_{c2}$ abdeckt, wobei die Filterscheibe (60) vorteilhafterweise auch in das Mantelmaterial hineinragt.

**6.** Vorrichtung nach einem der Ansprüche 1 bis 5, wobei der Wellenleiter (10) einmodenfähig ist.

**7.** Verfahren zur Herstellung einer optischen Vorrichtung, das die folgenden Schritte umfasst:

- Ausbilden eines Wellenleiters (10), wobei der Wellenleiter (10) einen Kern (20) mit einem Brechungsindex $n_c$ umfasst, der dazu bestimmt ist, eine quasimonochromatische Lichtstrahlung mit einer zentralen Wellenlänge $\lambda$ in einer Ausbreitungsmode mit effektivem Index $n_{eff}$ in einer ersten Richtung A zu leiten und diese Strahlung durch eine Austrittsfacette (50) des Wellenleiters (10) mit einem Brechungsindex $n_0$ bei der zentralen Wellenlänge $\lambda$ an die äußere Umgebung zu übertragen, wobei $n_0$ von $n_{eff}$ verschieden ist, gemäß einem Transmissionskoeffizienten T, wobei die Austrittsfacette (50) im Wesentlichen senkrecht zur ersten Richtung A verläuft,
- Ausbilden einer Filterscheibe (60) mit Brechungsindex $n_s$ bei der zentralen Wellenlänge $\lambda$, wobei $n_s$ von $n_{eff}$ verschieden ist, vorteilhafterweise einer Luftscheibe, in dem Wellenleiter (10) parallel zu der Austrittsfacette (50) und in einem ersten Abstand $e_{slab}$ ungleich Null von der Austrittsfacette (50), wobei die Filterscheibe (60) entlang der ersten Richtung A eine erste Dicke $e_{slit}$ ungleich Null aufweist, wobei der erste Abstand $e_{slab}$ und die erste Dicke $e_{slit}$ dazu ausgelegt sind, dass der Transmissionskoeffizient T des Wellenleiters (10) gleich einem ersten Transmissionskoeffizienten $T_1$ bei der Ausbreitungsmode mit effektivem Index $n_{eff}$ bei der zentralen Wellenlänge $\lambda$ ist, wobei der erste Transmissionskoeffizient $T_1$ das Verhältnis zwischen der Intensität der Ausbreitungsmode, die von der Facette übertragen wird, und der Intensität der auf der Filterscheibe einfallenden Ausbreitungsmode ist, wobei der erste Transmissionskoeffizient $T_1$ größer ist als ein Transmissionskoeffizient $T_d$ des Wellenleiters (10) ohne Filterscheibe (60), wobei $T_d$ das Verhältnis zwischen der Intensität der Ausbreitungsmode, die von der Facette übertragen wird, und der Intensität der auf der Facette einfallenden Ausbreitungsmode ist.

**8.** Verfahren nach Anspruch 7, wobei dem Ausbilden der Filterscheibe (60) ein Schritt der Auswahl des Transmissionskoeffizienten $T_1$ aus einem ersten Satz von Transmissionskoeffizientenwerten T vorausgeht, wobei der erste Satz von Transmissionskoeffizientenwerten T in Abhängigkeit von einem Satz von Werten erster Dicken $e_{slit}$ der Filterscheibe (60) und einem Satz erster Abstände $e_{slab}$ der Filterscheibe (60) von der Austrittsfacette (50) bestimmt wird, wobei der erste Satz von Transmissionskoeffizientenwerten T vorteilhafterweise rechnerisch bestimmt wird.

**9.** Verfahren nach Anspruch 7 oder 8, wobei das Ausbilden der Filterscheibe (60) einen Schritt des Ätzens des Wellenleiters (10) umfasst, wobei der Ätzschritt vorteilhafterweise ein Trockenätzen umfasst.

**10.** Verfahren nach einem der Ansprüche 7 bis 9, wobei der erste Transmissionskoeffizient $T_1$ größer als 80 %, vorzugsweise größer als 90 % ist.

**11.** Verfahren nach einem der Ansprüche 7 bis 10, wobei der Wellenleiter (10) ein planarer Wellenleiter ist, dessen Kern (20) eine Schicht ist, die zwischen zwei Mantelschichten (30 und 40) eingefügt ist, die jeweils ein Mantelmaterial mit einem Brechungsindex $n_g$ kleiner als $n_c$ aufweisen.

**12.** Verfahren nach Anspruch 11, wobei der Kern (20) einen ersten Querschnitt $S_{c1}$ in einer Ebene orthogonal zur ersten Richtung A aufweist, wobei die Filterscheibe (60) im Wesentlichen parallel zum ersten Querschnitt $S_{c1}$ ausgebildet ist und zumindest den ersten Querschnitt $S_{c1}$ abdeckt, wobei die Filterscheibe (60) vorteilhafterweise auch in die beiden Mantelschichten (30 und 40) hineinreicht.

**13.** Verfahren nach einem der Ansprüche 7 bis 10, wobei sich der Kern (20) vor dem Ausbilden der Filterscheibe über eine Länge L parallel zur ersten Richtung A erstreckt und einen zweiten Querschnitt $S_{c2}$ von rechteckiger Form aufweist, wobei der Kern (20) von einem Mantelmaterial mit einem Brechungsindex $n_g$ kleiner als $n_c$ umgeben ist.

**14.** Verfahren nach Anspruch 13, wobei die Filterscheibe (60) im Wesentlichen parallel zum zweiten Querschnitt $S_{c2}$ verläuft und zumindest den zweiten Querschnitt $S_{c2}$ abdeckt, wobei die Filterscheibe vorteilhafterweise auch in das Mantelmaterial hineinragt.

**Claims**

1. Optical device comprising:

    - a waveguide (10), comprising a core (20) having a refractive index $n_c$, for guiding quasi-monochromatic light radiation, of a central wavelength $\lambda$, in a propagated mode with effective index $n_{eff}$, in a first direction A and transmitting said radiation through an exit facet (50) of the waveguide (10) to the external environment with effective index $n_0$ at the central wavelength $\lambda$, $n_0$ being different from $n_{eff}$, according to a transmission coefficient T, the exit facet (50) being substantially perpendicular to the first direction A,

    the optical device being further **characterised in that** it further comprises:

    - a filter blade (60), with effective index $n_s$ at the central wavelength $\lambda$, $n_s$ being different from $n_{eff}$, advantageously an air blade, arranged in the waveguide (10), parallel to the exit facet (50) and at a first non-zero distance $e_{slab}$ from said exit facet (50), the filter blade (60) having, in the first direction A, a first non-zero thickness $e_{slit}$, the first distance $e_{slab}$ and the first thickness $e_{slit}$ being adapted so that the transmission coefficient T of the waveguide (10) is equal to a first transmission coefficient $T_1$ for the propagated mode with effective index $n_{eff}$ at the central wavelength $\lambda$, the first transmission coefficient $T_1$ being the ratio between the intensity of the propagated mode transmitted by the facet and the intensity of the propagated mode incident on the filter blade, the first transmission coefficient $T_1$ being greater than a transmission coefficient $T_d$ of the waveguide (10) devoid of any filter blade (60), $T_d$ being the ratio between the intensity of the propagated mode transmitted by the facet and the intensity of the propagated mode incident on the facet.

2. Device according to claim 1, wherein the waveguide (10) is a planar waveguide, the core (20) whereof is a layer inserted between two cladding layers (30 and 40), each of which comprises a cladding material having a refractive index $n_g$ that is less than $n_c$.

3. Device according to claim 2, wherein the core (20) comprises a first cross-section $S_{c1}$ along a plane that is orthogonal to the first direction A, the filter blade (60) being substantially parallel to the first cross-section $S_{c1}$, and covers at least said first cross-section $S_{c1}$, the filter blade (60) also advantageously extending into the two cladding layers (30 and 40).

4. Device according to claim 1, wherein the core (20) extends over a length L that is parallel to the first direction A, and has a second cross-section $S_{c2}$, rectangular in shape, whereby the core (20) is surrounded by a cladding material having a refractive index $n_g$ that is less than $n_c$.

5. Device according to claim 4, wherein the filter blade (60) is substantially parallel to the second cross-section $S_{c2}$, and covers at least said second cross-section $S_{c2}$, the filter blade (60) also advantageously extending into the cladding material.

6. Device according to one of claims 1 to 5, wherein the waveguide (10) is a single-mode waveguide.

7. Method for manufacturing an optical device comprising the steps of:

    - forming a waveguide (10), the waveguide (10) comprising a core (20) having a refractive index $n_c$, for guiding quasi-monochromatic light radiation, of a central wavelength $\lambda$, in a propagated mode with effective index $n_{eff}$, in a first direction A and transmitting said radiation through an exit facet (50) of the waveguide (10) to the external environment with effective index $n_0$ at the central wavelength $\lambda$, $n_0$ being different from $n_{eff}$, according to a transmission coefficient T, the exit facet (50) being substantially perpendicular to the first direction A,
    - forming a filter blade (60), with effective index $n_s$ at the central wavelength $\lambda$, $n_s$ being different from $n_{eff}$, advantageously an air blade, in the waveguide (10), parallel to the exit facet (50) and at a first non-zero distance $e_{slab}$ from said exit facet (50), the filter blade (60) having, in the first direction A, a first non-zero thickness $e_{slit}$, the first distance $e_{slab}$ and the first thickness $e_{slit}$ being adapted so that the transmission coefficient T of the waveguide (10) is equal to a first transmission coefficient $T_1$ for the propagated mode with effective index $n_{eff}$, at the central wavelength $\lambda$, the first transmission coefficient $T_1$ being the ratio between the intensity of the propagated mode transmitted by the facet and the intensity of the propagated mode incident on the filter blade, the first transmission coefficient $T_1$ being greater than a transmission coefficient $T_d$ of the waveguide (10) devoid of any filter blade (60), $T_d$ being the ratio between the intensity of the propagated mode transmitted by the facet and the intensity of the propagated mode incident on the facet.

8. Method according to claim 7, wherein the formation of the filter blade (60) is preceded by a step of selecting the transmission coefficient $T_1$ from among a first set of values of transmission coefficients T, the first set of values of transmission coefficients T being determined according to a set of values of first thicknesses $e_{slit}$ of the filter blade (60) and a set of first distances $e_{slab}$ of the filter blade (60) relative to the exit facet (50), the first set of values of transmission coefficients T being advantageously determined by a calculation.

9. Method according to either claim 7 or claim 8, wherein the formation of the filter blade (60) comprises a step of etching the waveguide (10), said etching step advantageously comprising a dry etching operation.

10. Method according to one of claims 7 to 9, wherein the first transmission coefficient $T_1$ is greater than 80%, preferably greater than 90%.

11. Method according to one of claims 7 to 10, wherein the waveguide (10) is a planar waveguide, the core (20) whereof is a layer inserted between two cladding layers (30 and 40), each of which comprises a cladding material having a refractive index $n_g$ that is less than $n_c$.

12. Method according to claim 11, wherein the core (20) comprises a first cross-section $S_{c1}$ along a plane that is orthogonal to the first direction A, whereby the filter blade (60) is formed substantially parallel to the first cross-section $S_{c1}$, and covers at least said first cross-section $S_{c1}$, the filter blade (60) also advantageously extending into the two cladding layers (30 and 40).

13. Method according to one of claims 7 to 10 wherein, before forming the filter blade, the core (20) extends over a length L that is parallel to the first direction A, and has a second cross-section $S_{c2}$, rectangular in shape, whereby the core (20) is surrounded by a cladding material having a refractive index $n_g$ that is less than $n_c$.

14. Method according to claim 13, wherein the filter blade (60) is substantially parallel to the second cross-section $S_{c2}$, and covers at least said second cross-section $S_{c2}$, the filter blade also advantageously extending into the cladding material.

1

Z

5

4
2
3

A

6

# FIG. 1

10

40

A

$S_{c1}$

$E_{gs}$

50

20

$E_c$

30

$E_{gi}$

# FIG. 2

10

L

50

20

$S_{c2}$

31

A

51

52

70

# FIG. 3

FIG. 4

FIG. 5a

FIG. 5b

FIG. 6

FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130084038 A

**Littérature non-brevet citée dans la description**

- **KATSUNARI OKAMOTO.** *Fundamentals of optical waveguides,* ISBN 978-0-12-525096-2
- **K. S. YEE.** Numerical solution of initial boundary value problems involving Maxwell's equations in isotropic média. *IEEE Trans. Antennas Propag.,* 1966, vol. 14 (3), 302-307
- **T. AELLEN et al.** Continuous-wave distributed-feedback quantum-cascade lasers on a Peltier cooler. *APPLIED PHYSICS LETTERS,* 2003, vol. 83, 1929-1931